# EUROPÄISCHE PATENTSCHRIFT

(11) **EP 2 063 546 B1**
(45) Veröffentlichungstag und Bekanntmachung des Hinweises auf die Patenterteilung: **16.01.2019**
(21) Anmeldenummer: 08020409.2
(22) Anmeldetag: 24.11.2008
(51) Int. Cl.: H04B 3/54, H04L 27/26

(54) **Mehrträger-Übertragungsverfahren zur Datenkommunikation in Stromversogungsnetzen**
Multiple carrier transfer method for data communication in power supply networks
Procédé de transmission à plusieurs supports destiné à la communication de données dans des réseaux d'alimentation en courant

(30) Priorität: 23.11.2007 DE 102007056807; 17.11.2008 DE 102008057737
(43) Veröffentlichungstag der Anmeldung: 27.05.2009
(73) Patentinhaber: ABB Schweiz AG, 5400 Baden (CH); Nuon Tecno B.V., 6921 RL Duiven (NL)
(72) Erfinder: Fliege, Norbert, 69469 Weiheim/Bergstrasse (DE)
(74) Vertreter: Vossius & Partner Patentanwälte Rechtsanwälte mbB

(56) Entgegenhaltungen:
- DE-A1-102005 006 613
- DE-C1- 19 648 382
- US-A1- 2003 224 784
- PIGHI R ET AL: "On multicarrier signal transmission for high-voltage power lines" POWER LINE COMMUNICATIONS AND ITS APPLICATIONS, 2005 INTERNATIONAL SYM POSIUM ON VANCOUVER, BRITISH COLUMBIA, CANADA 6-8 APRIL, 2005, PISCATAWAY, NJ, USA,IEEE, 6. April 2005 (2005-04-06), Seiten 32-36, XP010796784 ISBN: 978-0-7803-8844-4

## Beschreibung

### Patentanmelder:

1. Hytec Gerätebau GmbH
   Cochemer Str. 12 - 14
   68309 Mannheim
   BR Deutschland
2. Nuon Tecno B.V.
   Nieuwgraaf 125
   6921 RL Duiven
   Niederlande

### Erfinder:

1. Prof. Dr.-Ing. Dr. h.c. Norbert Fliege Weinbergstraße 21
   69469 Weinheim/Bergstraße
   BR Deutschland

### Vertreter

**Patentanwalt Claus Peter Pietruk**
**Heinrich-Lilienfeinweg 5**
**76229 Karlsruhe**

Die vorliegende Erfindung betrifft das oberbegrifflich Beanspruchte. Damit befasst sich die vorliegende Erfindung allgemein mit der Mehrträger-Datenübertragung für Stromversorgungsnetze.

Bei der Datenübertragung ist es im Regelfall erwünscht, Daten über die erforderliche Distanz mit hoher Übertragungsrate und kleiner Fehlerwahrscheinlichkeit zu übertragen.

Bei der Datenübertragung von einem Teilnehmer zu einem anderen Teilnehmer sendet ein erster Teilnehmer dazu die Daten mit Hilfe eines Senders in Form von modulierten Datenübertragungssignalen zu einem zweiten Teilnehmer, der die Datenübertragungssignale mit einem Empfänger empfängt und aus den empfangenen Signalen die gesendeten Daten ableitet. Dass dies im Duplexmodus möglich ist, also ein bidirektionaler Datenaustausch, insbesondere zur Bestätigung des Empfangs von Datenpaketen möglich ist, sei erwähnt.

Dies gilt auch für die Datenübertragung in Stromversorgungsnetzen (Power Line Communications PLC). Eine solche Datenübertragung über Stromversorgungsnetze ist bereits bekannt. Sie wird im Stand der Technik für verschiedene Zwecke verwendet. Zu den ältesten Anwendungen der Datenübertragung über Stromversorgungsnetze zählt die Trägerfrequenztechnik über Hochspannungsleitungen (TFH) und die Tonfrequenzrundsteuerungstechnik. In jüngerer Zeit hat die Breitbandübertragung auf "der letzten Meile" mit den Anwendungen Internetzugang und "Video on demand" eine vielfältige Entwicklung genommen. Wegen der vergleichsweise hohen Kosten, den geringen Reichweiten und der elektromagnetischen Unverträglichkeit ist dieser Technik jedoch eine breite Anwendung versagt geblieben.

Zitiert seien vorliegend insbesondere die folgenden Dokumente aus dem Stand der Technik: "Gebäudesystemtechnik: Datenübertragung auf dem 230-V-Netz" von Rainer Rosch, Klaus Dostert, Klaus Lehmann, und Robert Zapp von moderne industrie (Gebundene Ausgabe - 1998) Verlag: moderne industrie # ISBN-10: 3478931851 # ISBN-13: 978-3478931854; "Powerline Communications" von Klaus Dostert, Prentice Hall (2001), "Power line carrier FSK data system" US PS 4,556,866 der .Honeywell Inc. (Minneapolis, MN), "Spread spectrum communication system utilizing differential code shift keying" US PS Patent 6,064,695 ausfgegeben an Itran Communications Ltd. (Beer Sheva, IL), "Powerline Communications and Applications" von N. Pavlidou and H. Latchman and A.J. Han Vinck and R. Newman - Guest editorial, International Journal of Communication Systems p. 357-361, June 2003, "Coding and Modulation for a Horrible Channel" Ezio Biglieri, Politecnico di Torino, IEEE Communications Magazine, Vol. 41, No. 5, p. 92-98, May 2003, "Method and modem for subsea power line communication" WO2008011889A1 der Siemens AG (zwischenveröffenbtliches Dokument), " **Method for transmitting data by means of a carrier current** US2007/0064589, " Multicarrier transmission on power lines" EP1014640, 'Broadband for All' over Powerline to bridge the ICT divide in Europe" von Sathya Rao and Stephan Horvath, Broadband Europe 2006, Geneva; sowie " Systems and methods for network channel characteristicx measurement and network management" WO2005048467, der Sharp laboratories of America, Inc.

Weitere Dokumente des Standes der Technik sind DE102005006613, US2003/224784 und DE19648382 sowie "On Multicarrier Signal Transmission for High-Voltage Power Lines" von R. Pighi und R. Raheli.

Die Datenübertragung über Stromnetze trifft aber auf besondere Schwierigkeiten. Während nämlich in modernen Systemen wie den in Büros verbreiteten Ethernetleitungen die Netzwerktopologie per se durch Router, Hubs etc. einfach ist und die zur Datenübertragung verwendeten Kabel mit einem Wellenwiderstand zur Vermeidung von endseitigen Signalreflexionen terminiert sind, gilt dies für Stromnetze nicht.

Stromversorgungsnetze sind in der Regel verzweigt und vermascht. Die Starkstromleitungen sind an ihren Enden nicht mit ihrem Wellenwiderstand abgeschlossen. Das führt dazu, dass bei der Übertragung von Signalen im Netz vielfältige Reflexionen auftreten, die zu dem ursprünglichen Signal addiert werden. Durch die physikalischen Eigenschaften treten auf den Starkstromleitungen weiterhin Dämpfungen und Phasenverschiebungen auf. Erhebliche Dämpfungen werden zudem an Leitungsverzweigungen verursacht. Reflexionen, Dämpfungen und Phasenverschiebungen führen zu Übertragungskanälen zwischen den Teilnehmern mit problematischen Übertragungsfunktionen, die einer sicheren und stabilen Datenübertragung entgegenwirken. Es treten typischerweise starke Fluktuationen der Dämpfung, der Phase und des Signal-zu-Rausch-Verhältnisses über der Frequenz auf, was die Datenübertragung, verglichen mit der Übertragung über Fernmeldekabel, erheblich erschwert. Es können Frequenzbereiche auftreten, in denen eine Datenübertragung mit akzeptabler Fehlerwahrscheinlichkeit nicht möglich ist. Die Impulsantworten der Übertragungskanäle können erheblich länger ausfallen als die Zeit, die durch die direkte Wellenausbreitung von Sender zum Empfänger gegeben ist. Es kommt noch hinzu, dass sich die problematischen Übertragungsverhältnisse zwischen zwei Teilnehmern in einigen Netzen zeitlich verändern. Bei der Neuinstallation von Teilnehmern sind die Übertragungsfunktionen zu den anderen Teilnehmern in der Regel unbekannt. Häufig sind benachbarte Teilnehmer relativ gut zu erreichen, während weit entfernte Stationen nur mit sehr eingeschränkten Qualitäten oder gar nicht zu erreichen sind.

Im Bereich der Mittelspannungsnetze werden zudem nach nicht vorhersehbaren Ereignissen Teilbereiche der Netze abgetrennt und an andere benachbarte Netze angeschaltet. Dadurch können bestehende Datenübertragungsverbindungen zwischen Teilnehmern unterbrochen werden. Hier müssen für die abgetrennten Teilnehmer neue Übertragungswege organisiert werden.

Das macht die Signalübertragung schwierig.

Für bestimmte gewerbliche Anwendungen sind im Stand der Technik drei grundsätzlich verschiedene Datenübertragungsverfahren vorgeschlagen worden. Das älteste Verfahren ist das Single-Carrier-Verfahren mit Frequenzumtastung (Beispiel: AMIS-30585 S-FSK PLC modem). Es wird fast ausschließlich in Niederspannungsnetzen verwendet. Nachteilig sind seine relativ schlechte Bandbreiteneffizienz und die schlechte Flexibilität gegenüber den unbekannten und problematischen Eigenschaften der Übertragungskanäle. Alternativ dazu wird das Spread-Spectrum-Verfahren eingesetzt, das jedoch eine sehr geringe Bandbreiteneffizienz aufweist. In den praktisch eingesetzten Übertragungssystemen für die genannten Anwendungen werden Schrittgeschwindigkeiten von nicht mehr als 2400 Baud erreicht (Beispiel: YITRAN IT800 PLC modem).

Das dritte Datenübertragungsverfahren ist das OFDM-Verfahren (*orthogonal frequency division multiplexing*)*,* das bei der leitungsgebundenen Übertragung auch als DMT-Verfahren *(discrete multi tone)* bekannt ist. Dieses Mehrträgerverfahren weist die höchstmögliche Bandbreiteneffizienz auf und kann sich sehr flexibel durch Bit- und Power-Allocation (adaptive Modulation) an die stark fluktuierenden Frequenzgänge und Signal-zu-Rausch-Verhältnisse in den Stromversorgungsnetzen anpassen. Das OFDM-Verfahren findet auch in vielen anderen nachrichtentechnischen Systemen Anwendung, z.B. in ADSL-Systemen *(asymmetric digital subscriber line),* und erscheint neben anderen Mehrträgerverfahren für die Datenübertragung über Stromversorgungsnetze als am besten geeignet.

Den Mehrträgersystemen haften aber auch einige Nachteile und Schwierigkeiten an:
So wird in der Literatur über PLC häufig die Datenübertragung zwischen zwei Teilnehmern (Punkt-zu-Punkt) beschrieben. Vor einer Kommunikation zwischen zwei Teilnehmern muss vorher ein Verbindungsaufbau vorgenommen werden, der im Falle von Mehrträgersystemen sehr komplex und zeitaufwendig ist. Sollen nacheinander Übertragungsvorgänge zwischen verschiedenen Teilnehmerpaaren stattfinden, so führen die Verbindungsaufbaupausen dazwischen zu einer erheblichen Minderung der Effizienz des Gesamtdatenverkehrs.

Wird ein herkömmliches Mehrträgerverfahren mit synchronisierten Symbolen bei verschiedenen Teilnehmerpaaren mit unterschiedlichen Übertragungslaufzeiten eingesetzt, so besteht die zudem die Gefahr, dass die Nutzdatenanteile eines Datensymbols in das nächste Symbol hineinreichen und dadurch eine zeitliche Intersymbolinterferenz (zeitliches Übersprechen) entsteht. Dadurch kann die Fehlerwahrscheinlichkeit der Datenübertragung beträchtlich steigen.

Auch der Aufbau einer Verbindung zwischen zwei Teilnehmern ist im Stand der Technik oftmals kritisch. Hierbei messen beide Teilnehmer mit Hilfe von wohl definierten Testsignalen den Verbindungsweg aus und teilen sich gegenseitig das Ergebnis für alle Träger mit. Da in der Regel eine große Anzahl an Trägern verwendet wird, entstehen große Datenmengen, die den Verbindungsaufbau stark verzögern. Zur Maximierung der Bandbreiteneffizienz wird daher nach dem Stand der Technik regelmässig die gesamte Sendeleistung gleichmäßig auf alle Kanäle verteilt. In ungünstigen Fällen, bei dem nur ein einziger Kanal für eine Übertragung geeignet ist, kann es vorkommen, dass dieser aufgrund der geringeren Sendeleistung nicht erkannt wird. Dies hat den Nachteil, dass die Vermessung des Übertragungskanals wiederholt werden muss, wobei nicht sicher gestellt ist, dass dieser erneute Versuch erfolgreich abgeschlossen werden kann. Es kommt noch hinzu, dass bei dem wechselseitigen Datenaustausch die Empfangsbedingungen der Gegenseite (noch) nicht bekannt sind, also eine "blinde" Übertragung stattfindet.

Nach dem Stand der Technik muss daher die Übertragung mit Leitungscodierung hoher Redundanz durchgeführt werden. Dieses erweitert nochmals die Datenmengen und birgt die Gefahr in sich, dass bei besonders problematischen Übertragungsverhältnissen der Verbindungsaufbau scheitert, obwohl bei besserer Kenntnis der Übertragungsverhältnissen ein Verbindungsaufbau möglich wäre.

Selbst beim Vorhandensein von gut brauchbaren Trägern bleibt aber das Problem, dass andere Träger fehlerhafte Daten übertragen können und dieser Umstand erkannt werden muss. Dieses wirkt sich besonders gravierend bei zeitlich variablen Übertragungskanälen aus. Die Schwierigkeit, dass weit entfernte Knoten häufig übertragungstechnisch nur mit geringer Qualität zu erreichen sind, wird durch ein Mehrträgersystem nicht gelöst. Das gilt insbesondere auch für den Fall, dass ein Teilnetz aus einem ersten Stromversorgungsnetz abgetrennt und einem zweiten Stromversorgungsnetz zugeschaltet wird. Die Verbindungen der Teilnehmer aus dem Teilnetz werden unterbrochen. Im neuen zweiten Netz sind sie isolierte Teilnehmer ohne Verbindung zu anderen Teilnehmern. Dieses Problem wird durch die bekannten Mehrträgersysteme nicht gelöst. Dies ist besonders gravierend, wenn von vorneherein mit einer schlechten Datenübertragungsqualität gerechnet werden muss.

Bei Mehrträger-Punkt-zu-Punkt-Verbindungen sind typischerweise die Signalverarbeitungstakte beider Teilnehmer synchronisiert. Fordert man Punkt-zu-Mehrpunkt- oder sogar Mehrpunkt-zu-Mehrpunkt-Verbindungen, wird diese Taktsynchronisation sehr aufwendig, komplex und fehleranfällig. Verzichtet man andererseits auf die Taktsynchronisation, so wird bei einigen digitalen Modulationsverfahren die Reproduktion der Empfangsdaten aus den demodulierten Empfangssignalen im Wege der Schätzung sehr problematisch.

Nach dem Stand der Technik findet beim Vorhandensein einer Vielzahl von Teilnehmern im PLC-Netz zu einem gegebenen Zeitpunkt immer nur eine Datenübertragung zwischen zwei Teilnehmern statt. Damit wird der Tatsache Rechnung getragen, dass alle Teilnehmer an einem einzigen zusammenhängenden elektrischen Leiter angeschlossen sind. Würden mehrere Teilnehmer gleichzeitig senden, würden sie sich gegenseitig stören. Eine daraus resultierende übliche Betriebsart ist der Aufrufbetrieb, auch Master-Slave-Betrieb genannt Ein Master-Teilnehmer ruft nacheinander alle Slave-Teilnehmer auf. Dieser Betrieb hat den Nachteil, dass weit entfernte Slave-Teilnehmer unter schlechteren Bedingungen mit dem Master kommunizieren als benachbarte. In großen Netzen kann das Problem auftreten, dass kein Master-Teilnehmer gefunden werden kann, der eine Verbindung zu allen Slave-Teilnehmern aufbauen kann. Auch dies behindert die Verwendung in grossflächigen Stromversorgungsnetzen mit hoher Spannung.

Es wäre wünschenswert, trotz der oben genannten Probleme ein brauchbares Datenübertragungsverfahren angeben zu können.

Die Aufgabe der vorliegenden Erfindung besteht darin, Neues für die gewerbliche Anwendung bereitzustellen.

Die Lösung dieser Aufgabe wird in unabhängiger Form beansprucht. Bevorzugte Ausführungsformen finden sich in den Unteransprüchen.

Die vorliegende Erfindung betrifft somit ein Datenübertragungsverfahren, worin Datenübertragungssignale zwischen mindestens zwei Teilnehmern unter Verwendung eines Stromversorgungsnetzes übertragen werden, und wobei erfindungsgemäss vorgesehen ist, dass das Stromversorgungsnetz Starkstrom-Versorgungsleitungen umfasst, die Teilnehmer an Netzknoten an das Stromversorgungsnetz gekoppelt werden und die physikalischen Datenübertragungssignale über die Starkstrom-Versorgungsleitungen oder ihre Abschirmungen übertragen werden.

Es wurde damit erkannt, dass die Starkstromübertragung von Signalen in sinnvoller Weise möglich ist. Es ist dabei bevorzugt, wenn induktiv, kapazitiv oder galvanisch an das Starkstrom-Versorgungsleitungen Stromversorgungsnetz angekoppelt wird.

Es ist besonders bevorzugt, wenn das Datenübertragungsverfahren ein Mehrträger- Datenübertragungsverfahren ist. Hier kann ausgenutzt werden, dass die Mehrträger- Datenübertragungsverfahren entgegen den Erwartungen gerade bei Starkstrom-Versorgungsleitungen bzw. deren Abschirmungen erhebliche Vorteile bietet. Bevorzugt wird ein orthogonales Mehrträger-Übertragungsverfahren wie OFDM oder DMT. Alternativ können stark-frequenzselektive Verfahren wie Filterbankverfahren eingesetzt werden. Erfindungsgemäß werden die Datenübertragungssignale aller Teilnehmer in einheitlichen Mehrträgersymbolen strukturiert. Solch ein Symbol ist ein Zeitsignal endlicher, immer gleich bleibender Länge. Die Zahl der Symbole pro Sekunde ist die Symbolrate.

Unter einem besonders bevorzugten Aspekt sieht die Erfindung somit vor, dass bei einem Mehrträger-Datenübertragungsverfahren die Teilnehmer an verschiedenen Knoten im Stromversorgungsnetz installiert sind und dass zwei beliebige Teilnehmer, die miteinander kommunizieren, über eine durchgängige, nicht unterbrochene Starkstromversorgungsleitung miteinander verbunden sind. Diese Verbindungsverhältnisse sind kennzeichnend für die betrachteten Stromversorgungsnetze. Ein Netz (Strang) besteht dabei aus einer baumartigen Struktur von Versorgungsleitungen mit Verzweigungen, so dass alle Leitungen elektrisch miteinander verbunden sind. Koppelt man an verschiedenen Stellen dieses Netzes, an den so genannten Netzknoten, Teilnehmer in das Netz ein, so kann jeder Teilnehmer potentiell mit jedem anderen Teilnehmer im selben Netz über die Starkstromversorgungsleitungen kommunizieren.

Es ist weiter bevorzugt, wenn jeweils zwei miteinander kommunizierende Teilnehmer über eine durchgängige, nicht unterbrochene Starkstrom-Versorgungsleitung oder Starkstrom-Versorgungsleitungsabschirmung verbunden werden, die zwischen den Netzknoten verläuft. Damit werden zu schlechte Signale vermieden. Da zugleich die Möglichkeit eines Routing besteht, ergeben sich für den Betrieb in komplexen Stromnetzen aus der bevorzugten Ausführungsform keine praktischen Nachteile.

Es ist damit auch möglich, dass entlang der durchgängigen, Starkstrom-Versorgungsleitung oder Starkstrom-Versorgungsleitungsabschirmung weitere Teilnehmer an Netzknoten ankoppeln. Dies erleichtert den Netzaufbau erheblich.

Es ist besonders bevorzugt, wenn die Datenübertragung mit modulierten Mehrträgersymbolen im Symboltakt erfolgt.

Dies eröffnet insbesondere die Möglichkeit, dass die Mehrträgersymbole zyklisch erweitert werden. Auf diese Weise kann die Übertragungsqualität signifikant verbessert werden, d.h. es können z.B. höhere Übertragungsraten erzielt werden und/oder Daten weiter übertragen werden.

Vorteilhaft ist, wenn die Mehrträgersymbole eine zyklische Erweiterung vor dem Nutzdatenintervall besitzen, die den Einschwingvorgang aus der Impulsantwort der Übertragungsstrecke auffängt, und zusätzlich zyklische Erweiterungen vor und nach dem Nutzdatenintervall besitzen, die dazu dienen, zeitliche Intersymbolinterferenzen zu vermeiden. Dieses Vorgehen verbessert gerade auf Starkstromleitungen die Datenübertragung ganz erheblich.

Es ist bevorzugt, wenn die Symbolrahmen aller Teilnehmer in dem Stromversorgungsnetz synchronisiert sind. Dabei können sogar die Signalverarbeitungstaktraten aller Teilnehmer in dem Stromversorgungsnetz synchronisiert sein. Dies hat erhebliche Vorteile bei der Übertragung von Signalen unter einer Vielzahl von Teilnehmern. Die Synchronisation der Zeitabschnitte der Symbole, der so genannten Symbolrahmen, zwischen allen Teilnehmern ist ein vorteilhafter Aspekt der Erfindung. Als mögliche Ausführungsform der Erfindung kann ein auf das OFDM-Verfahren zugeschnittenes Zweitonverfahren verwendet werden, das den Einfluss des OFDM-Guard-Intervalls berücksichtigt. Damit senden und empfangen alle Teilnehmer im gleichen Zeitraster. Dies hat den Vorteil, dass die Kommunikation zwischen zwei Teilnehmern von einem Symbol zum nächsten auf die Kommunikation zwischen zwei anderen Teilnehmern umgeschaltet werden kann. Damit vermeidet man den üblicherweise sehr langwierigen Verbindungsaufbau zwischen zwei Mehrträger-Übertragungseinrichtungen. Alle in Frage kommenden Verbindungen können nun auf einmal aufgebaut werden und bleiben dann bestehen. Soll eine Verbindung genutzt werden, kann das von einem Symbol zum andern erfolgen. Diese pausenfreie Umschaltung von Verbindungen erhöht die Effizienz des Gesamtdatenverkehrs beträchtlich, besonders wenn in kurzer Folge viele verschiedene Verbindungen mit kurzen Nachrichten benötigt werden. Gerade in komplexen Systemen ergeben sich also erhebliche Vorteile.

Es ist zudem bevorzugt, wenn eine Untermenge von Trägern zu Kanälen zusammengefasst sind. Dabei wird typisch jeder Kanal mindestens einen Datenträger besitzen und jeder Träger zu genau einem, d.h. zu einem und nur zu einem Kanal gehören.

Es ist weiter bevorzugt, wenn beim Verbindungsaufbau zwischen zwei Teilnehmern beide Teilnehmer nacheinander in jedem einzelnen Kanal zunächst mit hoher, bevorzugt voller Sendeleistung Testsignale aussenden und aus den empfangenen Testsignalen mindestens ein für die Maximierung der Datenübertragungsrate und/oder Minimierung der Übertragungsfehlerrate günstigster Kanal und/oder die günstigsten Kanäle ermittelt werden. Wider erwarten wird auf diese Weise die für den Aufbau einer brauchbaren Verbindung benötigte Zeit sogar ganz erheblich verkürzt. Dies wird als besonders wichtig und vorteilhaft angesehen.

Es ist hierbei weiter bevorzugt, wenn wenigstens ein erster der Teilnehmer dem zweiten Teilnehmer nacheinander in jedem einzelnen Kanal mit hoher, bevorzugt voller Sendeleistung seine günstigsten Empfangskanäle mitteilt, wobei bevorzugt der zweite Teilnehmer auf den günstigsten Empfangskanälen des ersten Teilnehmers seine eigenen günstigsten Empfangskanäle mitteilt und beide Teilnehmer in der Folgezeit im Falle einer Datensendung die günstigsten Empfangskanäle des jeweils anderen Teilnehmers benutzen. Auf diese Weise kann die Kommunikation signifikant verbessert werden, ohne einen hohen Aufwand zu erfordern.

Es ist weiter bevorzugt, wenn zusätzlich im Ansprechen auf die Ermittlung der günstigsten Empfangskanäle bei beiden Teilnehmern die Sendeleistung auf die Kanäle und/oder auf die Träger in den Kanälen aufgeteilt wird, insbesondere zur Maximierung der Datenübertragungsrate und/oder der Minimierung der Übertragungsfehlerrate und bevorzugt das Ergebnis ausgetauscht wird. Durch die Aufteilung wird das System insgesamt weniger störungsanfällig.

Zum Aufbau einer neuen Verbindung wird also in bevorzugter Variante der Erfindung eine Prozedur verwendet, bei der beide Teilnehmer nacheinander in jedem einzelnen Kanal mit der vollen Sendeleistung Testsignale aussenden und beide Teilnehmer aus den empfangenen Testsignalen die für die Maximierung der Datenübertragungsrate und/oder Minimierung der Übertragungsfehlerrate günstigsten Kanäle ermitteln. Nach der Auswertung der empfangenen Testsignale in den Empfängern teilt der erste Teilnehmer dem zweiten Teilnehmer nacheinander in jedem einzelnen Kanal mit der vollen Sendeleistung seine günstigsten Empfangskanäle mit und der zweite Teilnehmer teilt auf den günstigsten Empfangskanälen des ersten Teilnehmers seine eigenen günstigsten Empfangskanäle mit. Damit ist die Verbindung zwischen beiden Teilnehmern aufgebaut. Beide Teilnehmer benutzen dann in der Folgezeit im Falle einer Datensendung die günstigsten Empfangskanäle des jeweils anderen Teilnehmers. Der Vorteil dieses Verfahren liegt darin, dass die beiden Teilnehmer ohne Kenntnis des Übertragungskanals, ohne weitere Messmittel und ohne fremde Hilfe selbsttätig die bezüglich Trägerauswahl und Sendeleistungsverteilung günstigste Konstellation der Übertragungsparameter für die Verbindung selbst im schlechtesten Fall, dass eine Datenübertragung nur über einen einzigen Kanal möglich ist, finden. Des Weiteren beobachten beide Teilnehmer nach der Ermittlung und Nutzung der günstigsten Kanäle im laufenden Betrieb bevorzugt die Qualität der günstigsten Kanäle und nehmen gegebenenfalls Korrekturen bei der Auswahl der Kanäle und der Aufteilung der Sendeleistung auf die Kanäle vor.

Zudem löst das genannte Verbindungsaufbau-Verfahren auch noch ohne weiteres das Problem, das beim Abtrennen von Teilnetzen aus einem ersten Stromversorgungsnetz und einem Anschalten des Teilnetzes an ein zweites Netz auftritt. Mit der selbständigen Ausmessung der Übertragungscharakteristik und der selbständigen Organisation günstiger Übertragungskanäle kann ein abgetrennter Teilnehmer im neu angeschalteten zweiten Netz die Verbindung zu benachbarten Knoten in dem zweiten Netz aufnehmen und damit neue Kommunikationswege suchen und organisieren.

Es ist demnach weiter bevorzugt, wenn beide Teilnehmer nach der Ermittlung und Nutzung der günstigsten Kanäle im laufenden Betrieb die Qualität der günstigsten Kanäle beobachten und die Auswahl der Kanäle und/oder die Aufteilung der Sendeleistung auf die Kanäle im Ansprechen auf die Beobachtung korrigieren.

Es ist weiter bevorzugt, wenn die Datenträger mit einer digitalen Differenzphasenmodulation betrieben werden, d.h. eine solche bei der Übertragung verwendet wird und dann im Empfänger die Größe des Differenzphasenrauschens ermittelt wird und die Größe des Differenzphasenrauschens als Kriterium für die Empfangskanalgüte bei der Ermittlung der günstigsten Empfangskanäle verwendet wird.

Die Teilnehmer (in der Regel eine Vielzahl) im Mehrträger-PLC-System werden wie erfindungsgemäß bevorzugt in der Regel nicht taktsynchronisiert. Das System bleibt dadurch wirtschaftlich und technisch einfach und robust. Diese vorteilhafte Betriebsart wird erfindungsgemäß dadurch ermöglicht, dass als Modulation der Träger eine DPSK (Differenz-Phasenmodulation, *difference phase shift keying*) verwendet wird und zur Ermittlung der Übertragungsqualität in Form des Signal-zu-Rausch-Verhältnisses das Rauschen der Differenzphase herangezogen wird. Bei einer Signalverarbeitung ohne Taktsynchronisation zwischen Sender und Empfänger und bei stark fluktuierendem Frequenzgang der Übertragungsstrecke laufen die Empfangssignalpunkte stetig durch die Signalebene. Eine Ermittlung der stochastischen Parameter wie Mittelwerte und Varianzen ist zwar mit vertretbarem Aufwand nicht möglich. Bewertet man jedoch die Statistik der Phasendifferenzen zwischen benachbarten Trägern, so erhält man, besonders im Falle einer großen Anzahl von Trägern, mit einfachen Mitteln eine zuverlässige Schätzung des Signalrauschens und damit der Übertragungsfehlerwahrscheinlichkeit. Diese Information kann letztlich verwendet werden, um die Datenkanäle zu bewerten und eine optimale Bit- und Power-Allocation einzustellen.

Es ist weiter bevorzugt, wenn das Stromversorgungsnetz in Subnetze aufgeteilt wird, jeder Teilnehmer einem Subnetz zugeordnet wird und in jedem Subnetz zwischen jeweils zwei Teilnehmern des Subnetzes Datenkommunikation unabhängig davon stattfinden kann, ob in den anderen Subnetzen gleichzeitig Datenverkehr stattfindet.

Ein weiter wesentlicher Aspekt der Erfindung ist damit ein Datenübertragungsbetrieb, bei dem eine oder gleichzeitig mehrere Datenkommunikationen in dem Stromversorgungsnetz stattfinden können. Dazu wird das Netz (Strang) in disjunkte Subnetze untergliedert. In jedem Subnetz kann unabhängig von den übrigen Subnetzen eine Datenkommunikation zwischen jeweils zwei Teilnehmern durchgeführt werden. Diese Vorgehensweise ist dann besonders vorteilhaft, wenn die Subnetze aus benachbarten oder mindestens nahe liegenden Teilnehmern gebildet werden. Die Übertragung zu weit entfernten Netzknoten wird vermieden und die entsprechenden Schwierigkeiten bei der Kommunikation zwischen weit entfernten Knoten treten erfindungsgemäss gar nicht erst auf.

Es ist weiter bevorzugt, wenn verschiedene Subnetze durch Zeitmultiplex und/oder Frequenzmultiplex und/oder Codemultiplex separiert sind, um so gegenseitige Störungen zu vermeiden.

Damit sich die Kommunikationsvorgänge in den verschiedenen Subnetzen nicht gegenseitig stören, ist also erfindungsgemäß eine Separierung der Datenübertragungsvorgänge mehrerer Teilnehmerpaare durch Zeitmultiplex und/oder Frequenzmultiplex und/oder Codemultiplex vorgesehen. Ein Empfänger empfängt dann zwar die Signale, die für andere Empfänger bestimmt sind. Wegen der unterschiedlichen Multiplexparameter stören sie aber nicht. Ein Beispiel dafür ist die Datenübertragung von Teilnehmerpaaren aus unterschiedlichen Subnetzen in jeweils unterschiedlichen Frequenzbereichen. Dazu kann auch die vorliegend genannte Bildung von Übertragungskanälen genutzt werden. Alle Kanäle verwenden dann unterschiedliche Träger, wobei in einem Kanal ein oder mehrere benachbarte Träger zusammengefasst sind. Somit sind alle Kanäle im Frequenzbereich disjunkt und können mit einem orthogonalen Mehrträgersystem wie OFDM oder DMT sauber getrennt werden.

Es ist also weiter bevorzugt, wenn mehrere Träger so zu Kanälen gefasst werden können, dass jeder Kanal mindestens einen Datenträger besitzt und jeder Träger zu genau einem Kanal gehört, und dann vorgesehen ist, dass die Kanäle für die Realisierung des Frequenzmultiplex genutzt werden.

Ein weiterer Aspekt der Erfindung ergibt sich zudem aus der bevorzugten Fähigkeit der Teilnehmer bei der Datenkommunikation in Subnetzen, neben einer Datenkommunikation mit einem Teilnehmer im gleichen Subnetz gleichzeitig eine Verbindung zu jeweils einem Teilnehmer in anderen Subnetzen nutzen zu können. Damit kann ein Teilnehmer empfangene Mehrträgersymbole, die nicht für ihn selbst bestimmt sind, an einen Teilnehmer im gleichen Subnetz oder einem anderen Subnetz weiterleiten. Dieser Vorgang lässt sich beliebig weit fortsetzen, so dass mit den bekannten Routing-Methoden (Layer-3-Technik) Mehrträgersymbole, die vom ursprünglichen Teilnehmer (Datenquelle, Startknoten) gesendet werden, über einen oder mehrere Sprünge von Router zu Router jeden anderen Teilnehmer (Datensenke, Zielknoten) im Netz erreichen können, auch dann, wenn zwischen dem Startknoten und dem Zielknoten keine direkte Datenübertragung möglich ist.

Es ist demgemäss bevorzugt, wenn -gerade bei Multiplextrennung von Subnetzen - mindestens ein Routing erfolgt, also ein Teilnehmer eines Subnetzes empfangene Mehrträgersymbole an andere Teilnehmer im gleichen Subnetz zuführt und/oder oder an andere Teilnehmer in anderen Subnetzen weitersendet, insbesondere derart, dass der mindestens eine Teilnehmer des einen Subnetzes zumindest einen Teil der von ihm empfangenen Mehrträgersymbole an andere Teilnehmer eines Subnetzes weiterleitet, die die Mehrträgersymbole selbst wieder weiterleiten. Mit anderen Worten wird wenigstens ein Teilnehmer als Router arbeiten; dieser Router kann auch selbst als ansonsten herkömmlicher Teilnehmer ausgebildet sein. Insbesondere ist es möglich, eine Vielzahl von Routern vorzusehen und die Routerfunktion nur im Bedarfsfall zu aktivieren.

Es ist daher weiter bevorzugt, wenn die als Router dienenden Teilnehmer Mehrträgersymbole auch einer eigenen Informationssenke zuleiten können.

Dass es bei dem Mehrträger-Datenübertragungsverfahren der Erfindung bevorzugt ist, dass Datenübertragungssignale in Form von elektrischen Strömen in die Drehstromphasenleitungen oder die Erdungsleitung der Abschirmung in Spulen auf einem Ringkern, der um die drei Drehstromphasenleitungen oder um die Erdungsleitung der Abschirmung liegt, induktiv ein- und/oder ausgekoppelt werden, sei erwähnt.

Schutz wird auch beansprucht für die Ausgestaltung der Teilnehmer zur Teilnahme ein Mehrträger-Datenübertragungsverfahren nach einem der vorhergehenden Ansprüche. Die Teilnehmer sind dabei einsichtigerweise die elektrischen Einheiten, die Daten untereinander übertragen. Die vorliegende Erfindung hat zudem erkannt, dass eine Konzentration auf bestimmte Anwendungen eine besonsders vorteilhafte Verwendung möglich macht.Sie ist daher besonders bevorzugt beim Fernauslesen von Zählwerten (Strom- und Gasverbrauchswerten), Überwachung der Stromversorgungseinrichtungen und des Betriebszustandes des Netzes (Fernwirktechnik), Koordinierung von dezentralen Energieerzeugungseinrichtungen in Smart Grids und ähnlichen Aufgaben, also primär für kommerzielle und gewerbliche Anwendungen bestimmt. Dies gibt zugleich Beispiele für wichtige Teilnehmer.

In den bevorzugten Anwendungen sind in der Regel viele Teilnehmer, d.h. Geräte und/oder Einrichtungen vorhanden, die über das Stromversorgungsnetz Informationen austauschen sollen. Dabei hat bevorzugt jeder Teilnehmer mit jedem anderen eine physikalische Verbindung über das Stromversorgungsnetz.

Die Erfindung wird nur beispielsweise und ohne Beschränkung erläutert unter Bezugnahme auf die Zeichnung. In dieser ist dargestellt durch:
- Fig. 1: die Struktur der Stromversorgungsnetze und der IP-Datenübertragungsnetze;
- Fig. 2: ein typischer Strang, d.h. ein galvanisch verbundenes Teilnetz, in einem Mittelspannungsnetz, wobei symbolisch Trafo-Stationen angedeutet sind sowie Sekundärstationen SS in jeder Trafo-Station
- Fig. 3: ein Beispiel einer induktiven Kopplung von Datenübertragungssignalen in ein Mittelspannungskabel, wobei links die Kopplung in die drei Drehstromphasen des Kabels und rechts die Kopplung in den Schirm mit
XMT = Wicklung für den Datensender,
RCV = Wicklung für den Datenempfänge veranschaulicht ist;
- Fig. 4: die Struktur eines OFDM-Symbol gemäß vorliegender Erfindung als Zeitsignal endlicher Länge, wobei
stark gezeichnet sind die Nutzdaten der Datenübertragung,
GI = Guard Intervalle zum Abfangen der Einschwingvorgänge bezeichnen und
TI1 und TI2 = die Toleranzintervalle zum Abfangen von unterschiedlichen Verzögerungen der eintreffenden Mehrträgersymbole und von Toleranzen der zeitlichen Symbolrahmensynchronisation bezeichnen;

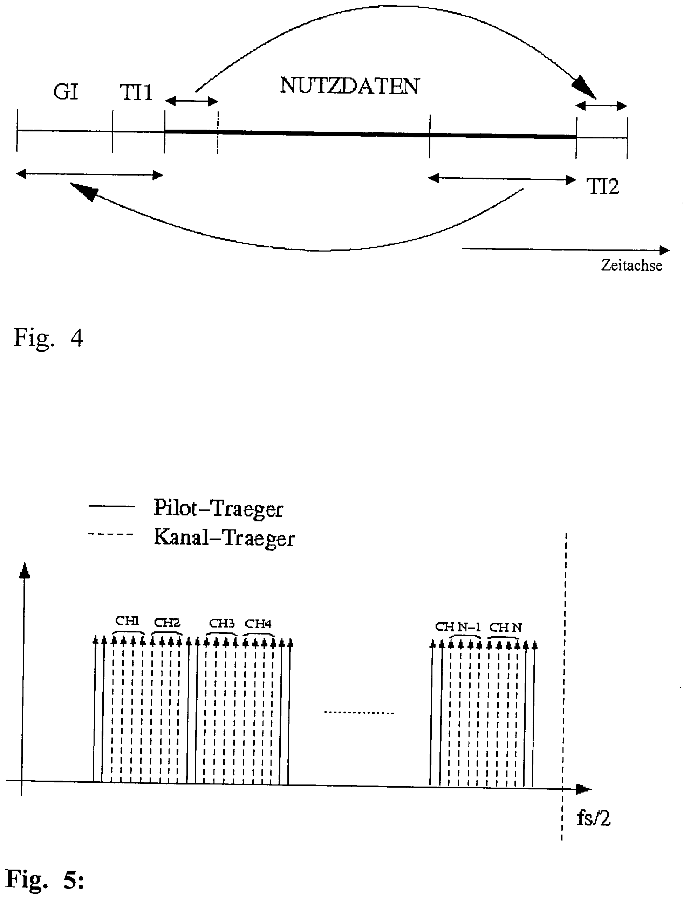

- Fig.5: ein Beispiel für die Einteilung der Träger eines Mehrträgerübertragungssystems in Abhängigkeit von der Frequenz, wobei
durchgehende Linien Pilotträgerpaare für die Symbolrahmensynchronisation darstellen und gestrichelt Datenträger, in Kanälen organisiert, veranschaulichen mit
CHx = x-ter Kanal , insgesamt N Kanäle vorhanden und fs/2 = halbe Abtastfrequenz.

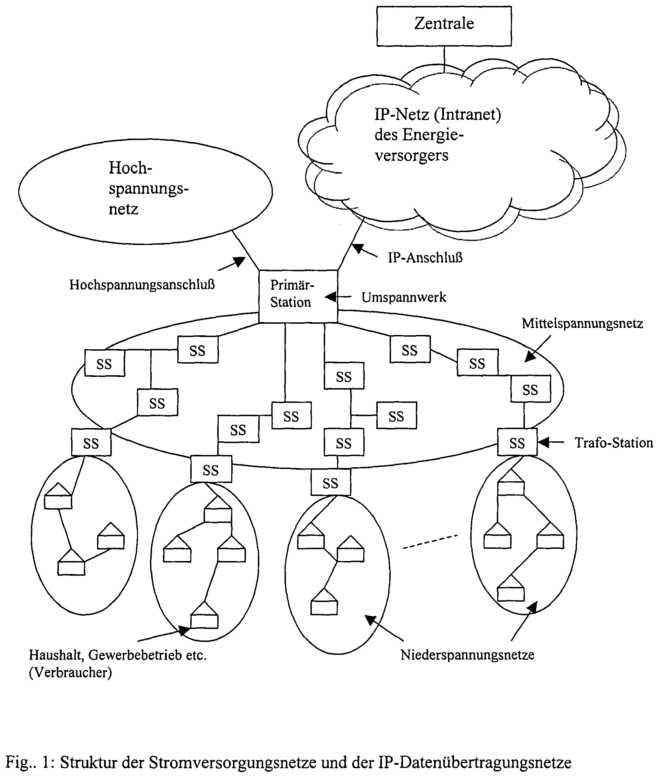

Fig. 1 zeigt die charakteristische Struktur von Stromversorgungsnetzen. In einem Umspannwerk wird die Hochspannung (z.B. 110 kV) in Mittelspannung (z.B. 10 kV) umgesetzt und auf mehrere Stränge im Mittelspannungsnetz verteilt. In jedem Strang befinden sich mehrere Trafo-Stationen, die Mittelspannung auf Niederspannung (380 V Drehstrom, 230 V Wechselstrom) umsetzen. Jede Trafo-Station speist die Niederspannung in ein separates Niederspannungsnetz ein, das Stromverbraucher in diesem Netz versorgt.

Die Datenübertragung kann nun von den Verbrauchern zu einer Zentrale und umgekehrt verlaufen, z.B. beim Zählwertauslesen. Bei der Fernwirkanwendung verläuft die Datenübertragung von den Trafo-Stationen zu einer Fernwirkzentrale und umgekehrt. Bei Smart-Grid-Anwendungen kann eine Datenübertragung zwischen Trafo-Stationen nötig sein.

Für die Datenübertragung kommen insbesondere die Nieder- und Mittelspannungsnetze in Frage. Eine Datenübertragung über die Hochspannungsnetze ist zwar prinzipiell gleichfalls technisch möglich; in der Regel stehen aber IP-Verbindungen zwischen der Primärstation und der Zentrale zur Verfügung, z.B. über separate Lichtwellenleiter. Das Datenübertragungssystem von Primärstationen zu den Zentralen ist also insoweit gelöst.

Offen bleibt dagegen die Datenübertragung in den Nieder- und Mittelspannungsnetzen. Im Bereich der Niederspannungsnetze werden bereits fertig entwickelte Datenübertragungsverfahren eingesetzt. Dort werden z.B. die Daten von den Verbrauchern in den Trafo-Stationen zusammengefasst und per Mobilfunk zu Zentralen weitergeleitet.

Dagegen ist die Datenübertragung über Mittelspannungsnetze relativ wenig untersucht worden. Hier stellt sich die Aufgabe der Datenübertragung zwischen einer Primärstation im Umspannwerk und mehreren Sekundärstationen (SS) in den Trafo-Stationen sowie auf den Datenverkehr zwischen Sekundärstationen.

Obwohl die vorliegende Erfindung also auch im Niederspannungsbereich anwendbar ist, konzentriert sich die vorliegende Erfindung primär und bevorzugt auf die Datenübertragung in Mittelspannungsnetzen, wo sie gut und erfolgreich eingesetzt werden kann.

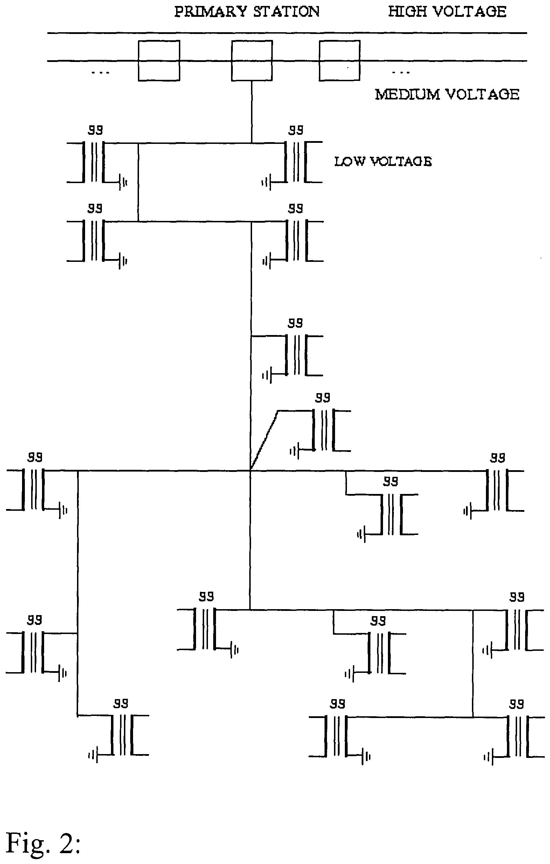

Fig. 2 zeigt einen typischen Strang in einem Mittelspannungsnetz. Das Umspannwerk speist in der Regel in mehrere solcher Stränge die Mittelspannung ein. Die folgenden Betrachtungen konzentrieren sich auf einen Strang. In einem Strang sind alle Trafo-Stationen galvanisch miteinander verbunden.

Möglicherweise erfolgt zeitgleich oder zeitlich hintereinander eine Datenübertragung auch in umgekehrter Richtung.

Bei der Datenübertragung in Stromversorgungsnetzen dienen die Starkstromversorgungsleitungen oder ihre Abschirmungen als Übertragungsmedium; hier also jene des Mittelspannungsnetzes. Dazu wird beim Sender das Sendesignal in das Stromversorgungsnetz eingekoppelt, was mit kapazitiven, induktiven oder galvanischen Mitteln geschehen kann..Wie dargestellt, ist der Empfänger mit dem Sender über eine durchgängige, nicht unterbrochene Starkstrom-Versorgungsleitung (vgl. 2) oder Starkstrom-Versorgungsleitungs-abschirmung verbunden.

Am Empfänger wird dann das Datenübertragungssignal, wenn auch in der Regel gedämpft, verzerrt und verrauscht, wieder mit kapazitiven, induktiven oder galvanischen Mitteln ausgekoppelt und dem Empfänger zugeführt.

Eine besonders wichtige und bevorzugte Ausführungsform der Ein- und Auskopplung ist die induktive Kopplung, bei der mit Hilfe von magnetischen Feldern Signalströme in die Starkstromleitungen induziert werden. Eine weitere wichtige Koppelart ist die Einkopplung von Signalspannungen in die Starkstromleitungen mit Hilfe von spannungsfesten Kondensatoren.

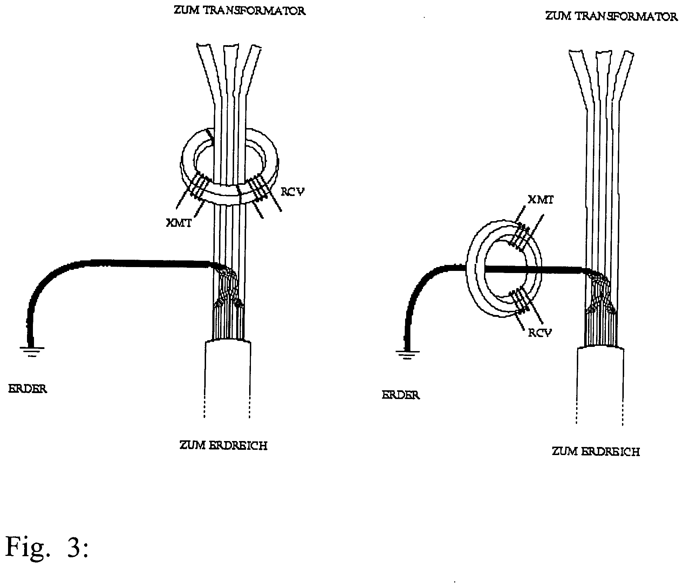

Fig. 3 zeigt skizzenhaft die induktive Kopplung. Bei dem typisch aus dem Erdreich kommenden Mittelspannungskabel wird der Schirm mit Hilfe eines Erders geerdet. Die drei innen liegenden Phasen werden dann dem Transformator zugeführt. Liegt die Trafo-Station nicht am Ende des Netzes (siehe Fig. 2), so werden ein oder mehrere weitere Mittelspannungskabel parallel zu den drei Phasen angeschlossen; dies entspricht einer weitergehenden Kabelführung bzw. Verzweigung.

Eine induktive Kopplung kann nun mit Hilfe eines Schnittband-Magnetkernes um die drei Phasen erfolgen. Der induzierte Strom fließt dann in die Phasen hinein bzw. heraus.

Alternativ und wie in Fig. 3 rechts dargestellt, kann die induktive Kopplung auch in den Schirm erfolgen. Der induzierte Strom fließt dann durch den Schirm und kann am entfernten Ende wieder dem Schirm entnommen werden bzw. durch Übersprechen an anderen Stellen des Netzes aus den Phasen zurück gewonnen werden.

Die Übertragung von Daten kann nun erfindungsgemäss durch ein Mehrträger-Übertragungsverfahren erfolgen. Dazu ist erfindungsgemäss die Möglichkeit vorgesehen, die Daten in Symbolen zu übertragen und diese zyklisch zu erweitern. Dadurch wird nicht zusätzliche Information übertragen, aber die besonders langen und ausgeprägten, unbekannten und verschiedenartigen Impulsantworten der Übertragungskanäle im Netz können mit Vorteil unwirksam gemacht werden. Dies erfindungsgemäss besonders bevorzugte Nutzung der zyklischen Erweiterung wirkt als Guard-Intervall (GI), wodurch die Einschwingvorgänge durch die Impulsantworten vor Beendigung des Guard-Intervalls abgeklungen sind und bei der Auswertung der Daten im Empfänger nicht mehr stören können. Durch eine zusätzliche zyklische Erweiterung vor und nach dem Nutzdatenintervall besteht ferner die Möglichkeit, zeitliche Verzögerungen der eintreffenden Mehrträgersymbole und Toleranzen bei der zeitlichen Symbolrahmensynchronisation begegnen zu können und diesbezügliche Fehler zu vermeiden. Insbesondere können dadurch zeitliche Intersymbolinterferenzen und daraus folgende steigende Übertragungsfehlerwahrscheinlichkeiten vermieden werden.

Fig. 4 zeigt ein OFDM-Symbol, d.h. ein beispielhaftes Mehrträgersymbol der vorliegenden Erfindung, als endlich langes Teilsignal im Zeitbereich. Das OFDM-Signal besteht aus einer Folge solcher gleich langer OFDM-Symbole. Stark gezeichnet ist der Nutzdatenanteil, z.B. 512 Abtastwerte als Ergebnis einer inversen schnellen Fouriertransformation IFFT (Inverse Fast Fourier Transform) im Sender. Das Guard-Intervall GI und das Toleranzintervall TI1 entstehen durch eine zyklische Erweiterung, d.h. durch Kopieren der Abtastwerte am Ende des Nutzdatenintervalls und verschieben der Kopie um 512 Abtastintervalle vor den Anfang des Nutzdatenintervalls. Das Toleranzintervall TI2 entsteht durch eine zyklische Erweiterung von Abtastwerten vom Anfang des Nutzdatenintervalls hinter das Ende des Nutzdatenintervalls. Bei einer fehlerhaften zeitlichen Verschiebung des Empfangssignals, die kleiner als die Breite von TI ist, gelangt das Nutzdatenauswerteintervall des Empfängers in die Intervalle TI1 oder TI2. Dieses bewirkt aber keine zeitliche Intersymbolinterferenz, sondern nur eine Phasendrehung, die mit einer geeigneten Modulation nahezu unschädlich gemacht werden kann. Während das GI dem Stand der Technik folgt, gehören die beiden Toleranzintervalle TI1 und TI2 zur vorliegenden Erfindung.

Fig. 5 veranschaulicht einen weiterer bevorzugt vorgesehenen Aspekt der Erfindung, nämlich die Strukturierung der Träger in Kanäle: Hierbei werden eine oder mehrere Untermengen von Trägern werden zu Kanälen zusammengefasst, so dass jeder Kanal mindestens 1 Datenträger besitzt. Dadurch kann sich der Datenaustausch der Frequenzcharakteristik des Netzes anpassen und es können Übertragungsfrequenzbereiche festgelegt werden, die erfahrungsgemäß eine zusammenhängende Datenübertragung ermöglichen. Vorteilhaft ist insbesondere, dass bei der Suche nach bestmöglichen Trägern für die Übertragung und der bestmöglichen Sendesignalverteilung auf die Träger der Organisationsaufwand und der Kommunikationsaufwand zwischen den Teilnehmern sehr klein gehalten werden kann. Fig. 5 zeigt beispielhaft die Zusammenfassung von jeweils mehreren Trägern zu einem Kanal mit dem Ergebnis von insgesamt N Kanälen.

## Patentansprüche

1. Mehrträger-Datenübertragungsverfahren, worin
Datenübertragungssignale
zwischen mindestens zwei Teilnehmerpaaren
unter Verwendung eines Stromversorgungsnetzes übertragen werden,
das Starkstrom-Versorgungsleitungen umfasst, wobei
die Teilnehmer der Teilnehmerpaare an Netzknoten an das Stromversorgungsnetz gekoppelt
und
die physikalischen Datenübertragungssignale über die Starkstrom-Versorgungsleitungen oder ihre Abschirmungen übertragen werden,
**dadurch gekennzeichnet, dass**
die Datenübertragung mit modulierten Mehrträgersymbolen im Symboltakt erfolgt, wobei in dem Stromversorgungsnetz die Symbolrahmen aller Teilnehmer synchronisiert werden
und dann
im Stromversorgungsnetz gleichzeitig mehrere Datenkommunikationen stattfinden,
wobei
das Stromversorgungsnetz in Subnetze aufgeteilt und jeder Teilnehmer einem Subnetz zugeordnet wird
und in jedem Subnetz zwischen jeweils zwei Teilnehmern des Subnetzes Datenkommunikation unabhängig davon stattfinden kann, ob in den anderen Subnetzen gleichzeitig Datenverkehr stattfindet,
wobei
mindestens ein Teilnehmer eines Subnetzes empfangene Mehrträgersymbole an andere Teilnehmer im gleichen Subnetz
und/oder an andere Teilnehmer in anderen Subnetzen
weitersendet.

2. Mehrträger-Datenübertragungsverfahren nach dem vorhergehenden Anspruch,
**dadurch gekennzeichnet, dass** die Mehrträgersymbole eine zyklische Erweiterung vor dem Nutzdatenintervall besitzen, die den Einschwingvorgang aus der Impulsantwort der Übertragungsstrecke auffängt, und zusätzlich zyklische Erweiterungen vor und nach dem Nutzdatenintervall besitzen, die dazu dienen, zeitliche Intersymbolinterferenzen zu vermeiden.

3. Mehrträger-Datenübertragungsverfahren nach dem vorhergehenden Anspruch, **dadurch gekennzeichnet, dass** induktiv, kapazitiv oder galvanisch an das Starkstrom-Versorgungsleitungen umfassende Stromversorgungsnetz angekoppelt wird.

4. Mehrträger-Datenübertragungsverfahren nach einem der vorhergehenden Ansprüche, **dadurch gekennzeichnet, dass** jeweils zwei miteinander kommunizierende Teilnehmer über eine durchgängige, nicht unterbrochene Starkstrom-Versorgungsleitung oder Starkstrom-Versorgungsleitungsabschirmung verbunden werden, die zwischen den Netzknoten verläuft.

5. Mehrträger-Datenübertragungsverfahren nach dem vorhergehenden Anspruch, **dadurch gekennzeichnet, dass** entlang der durchgängigen Starkstrom-Versorgungsleitung oder Starkstrom-Versorgungsleitungsabschirmung weitere Teilnehmer an Netzknoten ankoppeln.

6. Mehrträger-Datenübertragungsverfahren nach einem der vorhergehenden Ansprüche, **dadurch gekennzeichnet, dass** eine Untermenge von Trägern zu Kanälen zusammengefasst sind.

7. Mehrträger-Datenübertragungsverfahren nach dem vorhergehenden Anspruch,
**dadurch gekennzeichnet, dass** jeder Kanal mindestens einen Datenträger besitzt und jeder Träger zu einem und nur zu einem Kanal gehört.

8. Mehrträger-Datenübertragungsverfahren nach einem der vorhergehenden Ansprüche, **dadurch gekennzeichnet, dass** beim Verbindungsaufbau zwischen zwei Teilnehmern beide Teilnehmer nacheinander in jedem einzelnen Kanal zunächst mit voller Sendeleistung Testsignale aussenden und aus den empfangenen Testsignalen mindestens ein für die Maximierung der Datenübertragungsrate und/oder Minimierung der Übertragungsfehlerrate günstigster Kanal und/oder die günstigsten Kanäle ermittelt werden.

9. Mehrträger-Datenübertragungsverfahren nach dem vorhergehenden Anspruch,
**dadurch gekennzeichnet, dass**
wenigstens ein erster der Teilnehmer dem zweiten Teilnehmer nacheinander in jedem einzelnen Kanal mit voller Sendeleistung seine günstigsten Empfangskanäle mitteilt, und dass bevorzugt der zweite Teilnehmer auf den günstigsten Empfangskanälen des ersten Teilnehmers seine eigenen günstigsten Empfangskanäle mitteilt und beide Teilnehmer in der Folgezeit im Falle einer Datensendung die günstigsten Empfangskanäle des jeweils anderen Teilnehmers benutzen.

10. Mehrträger-Datenübertragungsverfahren nach einem der vorhergehenden Ansprüche, **dadurch gekennzeichnet, dass**
im Ansprechen auf die Ermittlung der günstigsten Empfangskanäle bei beiden Teilnehmern die Sendeleistung auf die Kanäle und/oder auf die Träger in den Kanälen aufgeteilt wird, insbesondere zur Maximierung der Datenübertragungsrate und/oder der Minimierung der Übertragungsfehlerrate und bevorzugt das Ergebnis ausgetauscht wird.

11. Mehrträger-Datenübertragungsverfahren nach dem vorhergehenden Anspruch,
**dadurch gekennzeichnet, dass** beide Teilnehmer nach der Ermittlung und Nutzung der günstigsten Kanäle im laufenden Betrieb die Qualität der günstigsten Kanäle beobachten und die Auswahl der Kanäle und/oder die Aufteilung der Sendeleistung auf die Kanäle im Ansprechen auf die Beobachtung korrigieren.

12. Mehrträger-Datenübertragungsverfahren nach den beiden vorhergehenden Ansprüchen, **dadurch gekennzeichnet, dass** die Datenträger mit einer digitalen Differenzphasenmodulation betrieben werden, im Empfänger die Größe des Differenzphasenrauschens ermittelt wird und die Größe des Differenzphasenrauschens als Kriterium für die Empfangskanalgüte bei der Ermittlung der günstigsten Empfangskanäle verwendet wird.

13. Mehrträger-Datenübertragungsverfahren nach einem der dem vorhergehenden Ansprüche, **dadurch gekennzeichnet, dass** verschiedene Subnetze durch Zeitmultiplex und/oder Frequenzmultiplex und/oder Codemultiplex separiert sind, um so gegenseitige Störungen zu vermeiden.

14. Mehrträger-Datenübertragungsverfahren nach dem vorhergehenden Anspruch, worin mehrere Träger so zu Kanälen zusammengefasst werden können, dass jeder Kanal mindestens einen Datenträger besitzt und jeder Träger zu genau einem Kanal gehört,
**dadurch gekennzeichnet, dass**
die Kanäle für die Realisierung des Frequenzmultiplex genutzt werden.

15. Mehrträger-Datenübertragungsverfahren nach einem der vorhergehenden Ansprüche, **dadurch gekennzeichnet, dass** der mindestens eine Teilnehmer des einen Subnetzes zumindest einen Teil der von ihm empfangenen Mehrträgersymbole an andere Teilnehmer eines Subnetzes weiterleitet, die die Mehrträgersymbole selbst wieder weiterleiten.

16. Mehrträger-Datenübertragungsverfahren nach einem der vorhergehenden Ansprüche, **dadurch gekennzeichnet, dass** die als Router dienenden Teilnehmer Mehrträgersymbole auch einer eigenen Informationssenke zuleiten können.

17. Mehrträger-Datenübertragungsverfahren nach einem der vorhergehenden Ansprüche, bei welchem Datenübertragungssignale in Form von elektrischen Strömen in die Drehstromphasenleitungen oder die Erdungsleitung der Abschirmung in Spulen auf einem Ringkern, der um die drei Drehstromphasenleitungen oder um die Erdungsleitung der Abschirmung liegt, induktiv ein- und/oder ausgekoppelt werden.

18. Elektrische Einheit als Teilnehmer für ein Mehrträger-Datenübertragungsverfahren, **dadurch gekennzeichnet, dass** sie zur Ausführung eines Mehrträger-Datenübertragungsverfahren nach einem der vorhergehenden Ansprüche ausgebildet ist.

## Claims

1. Multicarrier data transmission method, in which
data transmission signals are transmitted
between at least two subscriber pairs
using a power supply system
that comprises high-current supply lines, wherein
the subscribers of the subscriber pairs are coupled to the power supply system at system nodes
and the physical data transmission signals are transmitted via the high-current supply lines or their screens,
**characterized in that**
the data transmission is effected using modulated multicarrier symbols at the symbol clock rate, wherein the symbol frames of all subscribers are synchronized in the power supply system
and then
multiple data communications take place in the power supply system at the same time,
wherein the power supply system is split into subsystems and each subscriber is assigned to a subsystem,
and data communication can take place in each subsystem between two respective subscribers of the subsystem independently of whether data traffic takes place in the other subsystems at the same time,
wherein
at least one subscriber of a subsystem forwards received multicarrier symbols to other subscribers in the same subsystem and/or to other subscribers in other subsystems.

2. Multicarrier data transmission method according to the preceding claim, **characterized in that** the multicarrier symbols have a cyclic extension before the user data interval, which cyclic extension captures the transient process from the impulse response of the transmission link, and additionally have cyclic extensions before and after the user data interval, which cyclic extensions are used to avoid temporal inter-symbol interference.

3. Multicarrier data transmission method according to the preceding claim, **characterized in that** inductive, capacitive or DC coupling to the power supply system comprising high-current supply lines is used.

4. Multicarrier data transmission method according to one of the preceding claims, **characterized in that** two respective subscribers communicating with one another are connected by means of a continuous, uninterrupted high-current supply line or high-current supply line screen running between the system nodes.

5. Multicarrier data transmission method according to the preceding claim, **characterized in that** further subscribers are coupled to system nodes along the continuous high-current supply line or high-current supply line screen.

6. Multicarrier data transmission method according to one of the preceding claims, **characterized in that** a subset of carriers is combined into channels.

7. Multicarrier data transmission method according to the preceding claim, **characterized in that** each channel has at least one data carrier and each carrier belongs to one and only one channel.

8. Multicarrier data transmission method according to one of the preceding claims, **characterized in that** connection set-up between two subscribers results in both subscribers successively using each individual channel to first of all transmit test signals at full transmission power, and at least one channel most favourable for maximizing the data transmission rate and/or minimizing the transmission error rate and/or the most favourable channels being ascertained from the received test signals.

9. Multicarrier data transmission method according to the preceding claim, **characterized in that**
at least a first of the subscribers successively uses each individual channel to communicate its most favourable reception channels to a second subscriber at full transmission power, and **in that** preferably the second subscriber uses the most favourable reception channels of the first subscriber to communicate its own most favourable reception channels and both subscribers subsequently use the most favourable reception channels of the respective other subscriber for a data transmission.

10. Multicarrier data transmission method according to one of the preceding claims, **characterized in that**
in response to the ascertainment of the most favourable reception channels on both subscribers the transmission power is split over the channels and/or over the carriers in the channels, in particular to maximize the data transmission rate and/or minimize the transmission error rate, and preferably the result is exchanged.

11. Multicarrier data transmission method according to the preceding claim, **characterized in that** both subscribers, after ascertaining and using the most favourable channels, observe the quality of the most favourable channels in the course of operation and correct the selection of the channels and/or the split of the transmission power over the channels in response to the observation.

12. Multicarrier data transmission method according to the two preceding claims, **characterized in that** the data carriers are operated using digital differential phase modulation, the magnitude of the differential phase noise is ascertained in the receiver and the magnitude of the differential phase noise is used as a criterion for reception channel quality when ascertaining the most favourable reception channels.

13. Multicarrier data transmission method according to one of the preceding claims, **characterized in that** different subsystems are separated by time-division multiplexing and/or frequency-division multiplexing and/or code-division multiplexing so as to avoid reciprocal interference.

14. Multicarrier data transmission method according to the preceding claim, in which multiple carriers can be combined into channels such that each channel has at least one data carrier and each carrier belongs to precisely one channel,
**characterized in that**
the channels are used for producing the frequency-division multiplexing.

15. Multicarrier data transmission method according to one of the preceding claims, **characterized in that** the at least one subscriber of the one subsystem forwards at least some of the multicarrier symbols received by it to other subscribers of a subsystem, which themselves forward the multicarrier symbols again.

16. Multicarrier data transmission method according to one of the preceding claims, **characterized in that** the subscribers used as routers can also route multicarrier symbols to an information sink of their own.

17. Multicarrier data transmission method according to one of the preceding claims, in which data transmission signals in the form of electric currents are inductively coupled into and/or out of the three-phase lines or the earth line of the screen into coils on a toroidal core surrounding the three three-phase lines or surrounding the earth line of the screen.

18. Electrical unit as a subscriber for a multicarrier data transmission method, **characterized in that** it is configured to carry out a multicarrier data transmission method according to one of the preceding claims.

## Revendications

1. Procédé de transmission de données multiporteuses, dans lequel des signaux de transmission de données sont transmis entre au moins deux paires d'abonnés au moyen d'un réseau d'alimentation électrique comprenant des lignes d'alimentation à courant fort,
dans lequel les abonnés des paires d'abonnés sont couplés au réseau d'alimentation électrique au niveau de noeuds du réseau, et
les signaux physiques de transmission de données sont transmis par l'intermédiaire des lignes d'alimentation à courant fort ou de leurs blindages,
**caractérisé en ce que** la transmission de données s'effectue au moyen de symboles multiporteuses modulés dans l'horloge de symboles, dans lequel les trames de symboles de tous les abonnés sont synchronisées dans le réseau d'alimentation électrique,
puis plusieurs communications de données ont lieu simultanément dans le réseau d'alimentation électrique,
dans lequel le réseau d'alimentation électrique est divisé en sous-réseaux et chaque abonné est associé à un sous-réseau, et une communication de données peut avoir lieu dans chaque sous-réseau entre deux abonnés du sous-réseau indépendamment du fait qu'un trafic de données ait lieu ou non simultanément dans les autres sous-réseaux,
dans lequel au moins un abonné d'un sous-réseau transmet des symboles multiporteuses reçus à d'autres abonnés dans le même sous-réseau et/ou à d'autres abonnés dans d'autres sous-réseaux.

2. Procédé de transmission de données multiporteuses selon la revendication précédente, **caractérisé en ce que** les symboles multiporteuses présentent une extension cyclique avant l'intervalle de données utile, qui absorbe la partie transitoire de la réponse impulsionnelle du trajet de transmission, et présentent en outre, avant et après l'intervalle de données utile, une extension cyclique servant à éviter des brouillages temporels intersymboles.

3. Procédé de transmission de données multiporteuses selon la revendication précédente, **caractérisé en ce qu'**un réseau d'alimentation inductif, capacitif ou galvanique comprenant des lignes d'alimentation à courant fort est couplé au réseau d'alimentation électrique.

4. Procédé de transmission de données multiporteuses selon l'une des revendications précédentes, **caractérisé en ce que** deux abonnés communiquant l'un avec l'autre sont reliés par l'intermédiaire d'une ligne d'alimentation à courant fort continue et ininterrompue ou d'un blindage continu et ininterrompu de ligne d'alimentation à courant fort qui s'étend entre les noeuds du réseau.

5. Procédé de transmission de données multiporteuses selon la revendication précédente, **caractérisé en ce que** d'autres abonnés sont couplés à des noeuds de réseau le long de la ligne d'alimentation à courant fort continue ou du blindage continu de ligne d'alimentation à courant fort.

6. Procédé de transmission de données multiporteuses selon l'une des revendications précédentes, **caractérisé en ce qu'**un sous-ensemble de porteuses sont regroupées en canaux.

7. Procédé de transmission de données multiporteuses selon la revendication précédente, **caractérisé en ce que** chaque canal possède au moins une porteuse de données et **en ce que** chaque porteuse appartient à un seul et même canal.

8. Procédé de transmission de données multiporteuses selon l'une des revendications précédentes, **caractérisé en ce que**, lorsqu'une connexion est établie entre deux abonnés, les deux abonnés transmettent successivement dans chaque canal individuel des signaux de test initialement à pleine puissance de transmission et au moins un canal le plus favorable et/ou les canaux les plus favorables pour maximiser le débit de transmission de données et/ou pour minimiser le taux d'erreur de transmission sont déterminés à partir des signaux de test reçus.

9. Procédé de transmission de données multiporteuses selon la revendication précédente, **caractérisé en ce qu'**au moins un premier des abonnés signale successivement au second abonné, dans chaque canal individuel à pleine puissance de transmission, ses canaux de réception les plus favorables,
et **en ce que** le second abonné signale de préférence sur les canaux de réception les plus favorables du premier abonné ses propres canaux de réception les plus favorables et **en ce que** les deux abonnés utilisent ensuite les canaux de réception les plus favorables de l'autre abonné respectif dans le cas d'une transmission de données.

10. Procédé de transmission de données multiporteuses selon l'une des revendications précédentes, **caractérisé en ce que**,
en réponse à la détermination des canaux de réception les plus favorables pour les deux abonnés, la puissance d'émission est répartie entre les canaux et/ou entre les porteuses dans les canaux, en particulier pour maximiser le débit de transmission de données et/ou pour minimiser le taux d'erreur de transmission, et **en ce que** le résultat est de préférence remplacé.

11. Procédé de transmission de données multiporteuses selon la revendication précédente, **caractérisé en ce que** les deux abonnés, après avoir déterminé et utilisé les canaux les plus favorables pendant le fonctionnement, observent la qualité des canaux les plus favorables et corrigent la sélection des canaux et/ou la répartition de la puissance de transmission entre canaux en réponse à ladite observation.

12. Procédé de transmission de données multiporteuses selon les deux revendications précédentes, **caractérisé en ce que**, lors de la détermination des canaux de réception les plus favorables, les porteuses de données sont exploitées avec une modulation de phase différentielle numérique, l'amplitude du bruit de phase différentiel est déterminée dans le récepteur et l'amplitude du bruit de phase différentiel est utilisée comme critère de qualité des canaux de réception.

13. Procédé de transmission de données multiporteuses selon l'une des revendications précédentes, **caractérisé en ce que** différents sous-réseaux sont séparés par multiplexage temporel et/ou multiplexage par répartition de fréquence et/ou multiplexage par répartition de code afin d'éviter des brouillages mutuels.

14. Procédé de transmission de données multiporteuses selon la revendication précédente, dans lequel une pluralité de porteuses peuvent être regroupées en canaux de manière à ce que chaque canal possède au moins une porteuse de données et que chaque porteuse appartienne à exactement un canal, **caractérisé en ce que** les canaux sont utilisés pour réaliser le multiplexage en fréquence.

15. Procédé de transmission de données multiporteuses selon l'une des revendications précédentes, **caractérisé en ce que** l'au moins un abonné dudit sous-réseau transmet au moins une partie des symboles multiporteuses reçus par lui à d'autres abonnés d'un sous-réseau, qui retransmettent eux-mêmes les symboles multiporteuses.

16. Procédé de transmission de données multiporteuses selon l'une des revendications précédentes, **caractérisé en ce que** les abonnés qui servent de routeurs peuvent également réacheminer des symboles multiporteuses à leur propre puits de données.

17. Procédé de transmission de données multiporteuses selon l'une des revendications précédentes, dans lequel des signaux de transmission de données sous forme de courants électriques sont injectés et/ou extraits par induction sur les lignes triphasées ou la ligne de terre du blindage dans des bobines d'un noyau annulaire qui est disposé autour des trois lignes triphasées ou de la ligne de terre du blindage.

18. Unité électrique en tant qu'abonné pour un procédé de transmission de données multiporteuses, **caractérisée en ce qu'**elle est conçue pour mettre en oeuvre un procédé de transmission de données multiporteuses selon l'une des revendications précédentes.
